Europäisches Patentamt

European Patent Office

Office européen des brevets

(19)

(11) Publication number: **0 164 886**

**A1**

(12) **EUROPEAN PATENT APPLICATION**

(21) Application number: 85303232.4

(22) Date of filing: 07.05.85

(51) Int. Cl.⁴: **H 04 N 5/30**
H 04 N 7/18, H 01 J 31/26

(30) Priority: 07.05.84 US 607600
24.04.85 US 726757

(43) Date of publication of application:
18.12.85 Bulletin 85/51

(84) Designated Contracting States:
AT BE CH DE FR GB IT LI LU NL SE

(71) Applicant: HAMAMATSU CORPORATION
420 South Avenue
Middlesex New Jersey(US)

(72) Inventor: Schiller, Norman H.
163-16 Willets Point Boulevard
Whitestone New York 11357(US)

(72) Inventor: Alfano, Robert R.
3777 Independence Avenue
Bronx, New York 10463(US)

(74) Representative: Cross, Rupert Edward Blount et al,
BOULT, WADE & TENNANT 27 Furnival Street
London EC4A 1PQ(GB)

(54) Apparatus for sensing and displaying light signals.

(57) An apparatus for sensing and displaying the temporal properties of a plurality of light signals occurring at different locations simultaneously comprises a plurality of optical fibers (51–1, 51–6 and 57–1, 57–6) of equal length used to transmit the individual light signals from the various location (L1 to L6) to the input slit (33) of a streak camera (15) where they are imaged on a photocathode at the input end as a row of light spots orthogonal to the sweep direction, one from each light signal. The impinging light signals are processed in the steak camera (15) to produce a pattern of individual spaced streak images on a phosphor screen at the output end of the streak camera (15), with each streak image corresponding to a trace of intensity vs. time of one of the light signals. A television camera (17) or a two dimensional detector or a plurality of linear array detectors converts the pattern of streak images formed on the phosphor screen into an electrical image which is fed into a computer (19) for storage and/or processing.

./...

EP 0 164 886 A1

FIG. 1

## APPARATUS FOR SENSING AND DISPLAYING LIGHT SIGNALS

The present invention relates generally to apparatus for sensing and displaying temporal properties of light signals and more particularly to an apparatus for sensing and displaying the temporal properties of a plurality of light signals occurring at spatially separated locations simultaneously.

Oscilloscopes are well known in the art and commonly used for displaying a trace of intensity vs. time of an electrical signal over time scales as short as in the nanosecond range. In some oscilloscopes as many as four electrical signals may be received at one time and displayed. One of the limitations of oscilloscopes, however, is that they receive only electrical type signals. If a light signal is to be displayed it must first be converted, such as by a photodiode, into an electrical signal. Another problem with oscilloscopes is that they are limited to response times in the nanosecond range and are therefore not capable of displaying temporal properties of signals that are smaller, such as in the picosecond range. Another problem with oscilloscopes is that they are not constructed generally to receive more than four signals at one time.

In a number of instances it would be desirable to be able to sense and display a plurality of greater than four signals occurring simultaneously at different locations and in the picosecond range.

It has been suggested that a plurality of greater than four light signals (i.e. such as 100 light signals) could be sensed and displayed on a single oscilloscope by using an array of photodiodes to convert the light signals to electrical signals and then sequentially scanning the photodiode array. One problem with this arrangement is that the response time for the scanning mechanism is limited to the microsecond range. Another problem with this arrangement is that it is not suited for a plurality of light signals at spatially remote locations.

Streak cameras are about ten years old in the art and have been used, hitherto, to directly measure the time dynamics of luminous events, that is, to time resolve a light signal. A typical streak camera includes an entrance slit which is usually rectangular, a streak tube, input relay optics for imaging the streak image formed at the output end of the streak camera tube onto an external focal plane. The image at the external focal plane is either photographed by a conventional still camera or a television camera. The streak camera tube generally includes a photocathode screen, an accellerating mesh, sweeping electrodes and a phosphor screen. The streak camera tube may also include a microchannel plate

0164886

or external image intensifier. Light incident on the entrance of the streak camera is converted into a streak image which is formed on the phosphor screen at right angles to the sweep axis of the streak camera with the intensity of the streak image from the start of the streak to the end of the streak corresponding to the intensity of the light incident thereof during the time window of the streak. In some streak cameras the resulting streak image is oriented vertically on the phospor screen while in other streak cameras the resulting streak image is oriented horizontally on the phosphor screen. The input optics of the steak camera is usually a single lens.

In an article entitled "An Ultrafast Streak Camera System" by N. Schiller, Y. Tsuchiya, E. Inuzuka, Y. Suzuki, K. Kinoshita, K. Kamiya, H. Iida and R. Alfano appearing in the June, 1980 Edition of Optical Spectra, various known streak camera systems are discussed.

In U.S. -A-4,232,333 there is disclosed a streak image analyzing device in which the output streak image of a streak camera is fed into a television camera. The output of the television camera is fed through a video-mixing circuit to a monitor. The output of the television camera is also fed to an integrating circuit through a gate circuit. The output of the integrating circuit is fed to a memory through an analog to digital converter. The output of the memory is displayed by a display unit and/or fed back into the video-mixing circuit.

0164886

In an article entitled "Picosecond Characteristics Of A Spectrograph Measure By A Streak Camera/Video Readout System" by N.H. Schiller and R.R. Alfano appearing in the December, 1980 issue of Optical Communications, Volume 35, No. 3 pp 451-454 a streak camera/video readout system is disclosed. Another article pertaining to streak cameras and spectrographs is "Coupling An Ultraviolet Spectrograph to a SC/OMA for Three Dimensional Picosecond Fluorescent Measurements" by C.W. Robinson et al in Multichannel Image Dectectors pp. 199-213. ACS Symposium Series 102, American Chemical Society.

In U.S. -A-4,435,727 an apparatus is disclosed for use in calibrating the time axis and intensity linearity of a streak camera or any optoelctronic device over any one of a number of different time scales. The apparatus includes a plurality of bundles of optical fibers mounted on a rotation wheel and a pulsed light source. Each bundle of optical fibers is made up of a plurality of optical fibers, each cut to a different length with the differences in length between the fibers in any one bundle being uniform and the differences in length of the fibers in one bundle being different from the differences in length of the fibers in each one of the other bundles. The fibers in each bundle are arranged so that one set of ends terminates in a common input plane and the other set of ends terminates in a common output plane. In using the apparatus, the rotation wheel is positioned so that a selected one of the bundles is located to receive the light pulse from the light source and transmit the light received into the slit of the streak camera. A light pulse entering the bundle from the input end emerges from the output end as a train of pulses of equal intensity, one from each fiber, separated in time from one another in accordance with the difference in lengths of the fibers. In an illustrative embodiment of the invention, the number of bundles of fibers on the rotation wheel is five, the number of fibers in each bundle is ten and the differences in length of the fibers in the different bundles are 1, 2, 4, 10 and 20 cm respectively. As a reuslt, depending on which bundle is illuminated, ten pulses of equal intensity, each separated in time by 50, 100, 200, 500 and 1000 picoseconds, respectively, are produced.

In U.S. -A-3,827,075 there is disclosed a solid state television camera wherein the light from an object is focused on a plurality of bundles of optical fibers. The optical fibers on each bundle are respectively connected to the light responsive face of a plurality of photo-piezoelectrical effect transducer crystals. Each crystal is activated by sound source located at one end of the crystal. As the sound wave travels down the length of a crystal, a voltage occurs across the crystal that is proportional to the light from the particular optical fiber when the travelling sound wave is coincident with that particular optical fiber. As the sound wave travels down the crystal a plurality of electrical pulses of varying amplitude in proportion to light intensity, sequentially appear across the crystal that

0164886

represents one horizontal sweep of the object. A plurality of sweeps may be successively or simultaneously taken of the object by the remaining bundles and corresponding crystals that constitute an electrical representation of the object which may be then transmitted to a distant television receiver.

In U.S. -A-3,892,468 there is disclosed an organ array comprising a plurality of optical fibers each cut to a different length with the differences between functionally adjacent (i.e. lengthwise consecutive) fibers being uniform. The fibers are arranged in a bundle so that one set of ends of the fibers is terminated in an input plane and the opposite set of ends is terminated in an output plane. Described are several embodiments utilizing the organ array including a passive spatial scanner, optical memory systems, an image converter, an optical sampling oscilloscope, and an X-Y coordiante locator.

Other patents of interest include U.S. -A-2,436,104; U.S. -A-3,765,769; U.S. -A-4,162,851 and U.S. -A-4,299,488.

According to this invention there is provided apparatus for sensing and displaying the temporal properties of a plurality of light signals occurring at spatially separated locations simultaneously, characterised by

    a.    a streak camera having an input end and an output end,

0164886

   b.    optical fiber means for transmitting each light signal separately from said spatially separated locations to said input end of said streak camera such that each light signal will produce a separate streak image at said output end,

   c.    means for forming an electrical image of the pattern of streak images formed at said output end of said streak camera,

   d.    a computer for storing and/or processing the electrical image formed by said electrical image forming means,

   e.    means for selectively displaying one or more of said streak images, and

   f.    a control device for controlling said computer and the output of said display means.

As will be appreciated, the apparatus of the present invention is, in essence, a new generation oscilloscope and may be appropriately called a photonic oscilloscope.

This invention will now be described by way of example with reference to the drawings, in which:-

Fig. 1 is a schematic illustration of an embodiment of an apparatus according to the invention;

Fig. 2 is a sectional view showing details of a streak camera shown in Fig. 1;

0164886

Fig. 3 is a plan view of another embodiment of a portion of the apparatus shown in Fig 1;

Fig. 4 is a plan view showing the front face of the photocathode in the streak camera shown in Fig. 2 and the row of light images formed thereon from light signals from the different locations;

Fig. 5 is a simplified sectional view of one of the fiber optic couplers shown in Fig. 1;

Fig. 6 is a simplified sectional view of a modified form of the fiber optic coupler shown in Fig. 5; and

Fig. 7 is a simplified top view of a portion of another embodiment of apparatus according to the invention.

Like reference numerals have been used for like parts throughout the drawings.

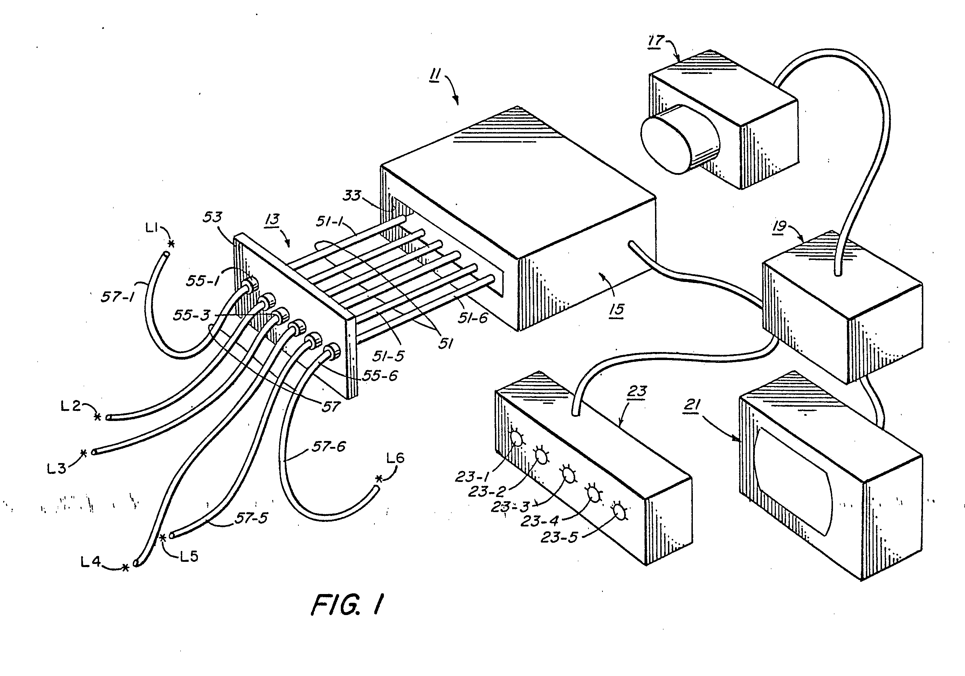

Referring now to the drawings, there is shown in Fig. 1 a plurality of spatially separated locations $L_1$ through $L_6$ at which light signals are either generated or are to be sensed and an apparatus 11 for sensing and displaying the temporal properties of the light signals from locations $L_1$ through $L_6$ simultaneously.

Apparatus 11 includes a fiber optic assembly 13, a streak camera 15, a video camera 17, a computer 19, a TV monitor 21 and a control panel 23.

0164886

Fiber optic assembly 13 transmits the individual light signals from locations $L_1$ through $L_6$ to streak camera 15. The optical fibers making up fiber optic assembly 13 are of equal length so that the light signals from locations $L_1$ through $L_6$ will all arrive at streak camera 15 at the same time. Streak camera 13 receives the plurality of light signals and produces at its output a pattern of streak images, each streak image in the pattern being derived from one of the light signals. Video camera 17 converts the pattern of streak images into an electrical image. Computer 19 stores and/or processes the electrical image output of the video camera. TV monitor 21 displays one or more of the streak images stored in computer 19 and control panel 23 allows the user to communicate with computer 19 to vary the signal scale, time scale, X and Y axes and to select the particular streak image  or images to be displayed.

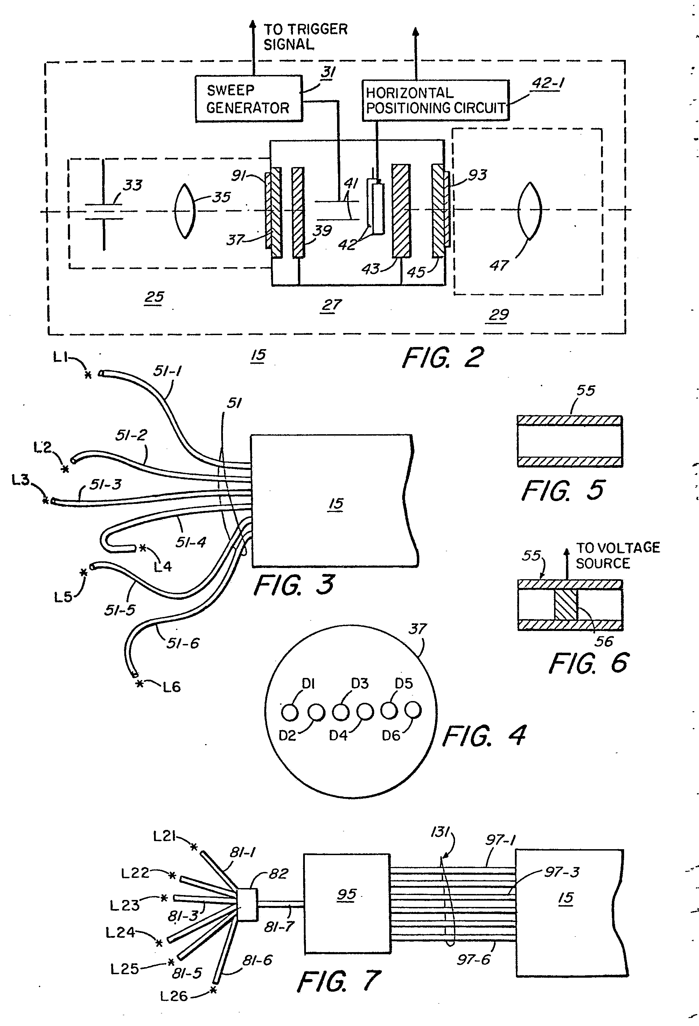

Streak camera 15, which is shown in more detail in Fig. 2 includes an input section 25, a streak camera tube 27, an output section 29 and a sweep generator 31. Input section 25 includes an input slit 33 and imaging optics 35. Streak camera tube section 27 includes a photocathode 37, an accelerating mesh 39, a pair of sweeping electrodes 41, a pair of horizontally positioning electrodes 42 controlled by a horizontal positioning circuit 42-1, a microchannel plate 43 and a phosphor screen 45. Output section 29 includes imaging optics 47. Input slit 33 is horizontal and

0164886

and rectangularly shaped. Sweeping electrodes 41 are oriented to produce a vertical sweep so as to produce a vertically oriented streak image. Horizontal positioning circuit includes a generator which can either be a single shot or a step type.

Fiber optic assembly 13 includes a first plurality of optical fibers 51-1 through 51-6 of equal length, a coupling plate 53 having a plurality of optical fiber couplers 55-1 through 55-6 and a second plurality of optical fibers 57-1 through 57-6 of equal length. The optical fibers in each plurality are preferably around 5 to 100 microns in diameter. One end of each optical fiber 51 is mounted by any suitable means on the input slit 33 in a horizontal row, as shown. The other end of each optical fiber 51 is connected to one of the optical fiber couplers 55. One end of each optical fiber 57 is coupled to one of the optical fiber couplers 55 and the other end of each optical fiber 57 is at one of the locations $L_1$ through $L_6$. Locations $L_1$ through $L_6$ need not be at the same distance from coupling plate 53 or streak camera 15 but since the individual fibers in both sets of fibers are of equal length the time of travel of the light signals from the various locations to the streak camera 15 will be the same. Thus, the light signal from location $L_1$, for example, will be transmitted to streak camera 15 through optical fiber 57-1, fiber optic coupler 55-1 and optical fiber 51-1. A simplified enlarged section view of one of the fiber optic couplers is shown in Fig. 5.

Coupling plate 53 may include an optical or mechanical light shutter controllable by separate means (not shown) or computer 19 associated with each joined pair of fibers for selectively gating the light signal that is being transmitted along each fiber. The light shutters may be mounted inside the fiber optic couplers 55. An example of a optical light shutter is an electro-optical light modulator. An example of a fiber optic coupler 55 with an electro-optical light modulator light shutter 56 is shown in Fig. 6. Fiber optic couplers 55 may be mounted on coupling plate 53 in an array of rows and columns rather than a single row as shown.

Instead of comprising two sets of optical fibers joined together by a coupling plate, fiber optic assembly 13 may comprise a single set of fibers of equal length, each mounted at one of their ends of the input slit and with their other ends being at the locations $L_1$ through $L_6$, as shown in Fig. 3.

Instead of mounting the output end of fiber optic assembly 13 on input slit 33, the optics 35 and input slit 33 may be omitted from streak camera 15 and the ends of the individual fibers 43 mounted directly on the front surface of photocathode 31 in a horizontal row.

In the operation of apparatus 11, the light signal from each location $L_1$ through $L_6$ is transmitted by optical fiber assembly 13 to input slit 33 of streak camera 15 where they are imaged by imaging optics 29 onto photocathode 37, the imaging being in the form of a horizontal row of spaced dots $D_1$ through $D_6$, as shown in Fig. 4, with each dot corresponding to the light signal from one location $L_1$ through $L_6$. The image is converted by photocathode 37 into an electrical image which is accelerated by accelerating mesh 39 into the streak camera tube 27, deflected in a vertical sweep generator 31, amplified by microchannel plate 43 and converted into a visible optical image on phosphor screen 45. The visible image formed on phosphor screen 45 will comprise a pattern of a plurality of horizontally spaced vertical streak images, each streak image representing a trace of intensity vs. time for one of the light signals from locations $L_1$ through $L_6$.

The image pattern formed in phosphor screen 45 is imaged by optics 47 onto video camera 17 where it is converted into an electrical image. The electrical image in video camera 17 is then fed into computer 19 where it is digitized and stored and/or processed. If video camera 17 is a type that outputs digital signals, digitizing is not necessary in computer 19. On the other hand, if the output of video camera 17 is analog signals the computer will contain appropriate circuitry, for digitizing the input signals.

The image pattern stored in computer 19 is corrected for nonlinearities in the system and normalized. The resulting image or any selected portion thereof is displayed on TV monitor 21. Switches 23-1, 23-2, 23-3, 23-4 and 23-5

0164886

in control panel 23, which is coupled to computer 19, allow the user to change the signal scale, the time scale, the X axis, the Y axis as well as select the particular streak image or images respectively which are to be displayed. As can be appreciated, the streak image of an individual light signal or group of light signals may be selected for simultaneous viewing, comparison, normalization and analysis.

It is to be understood that the number of locations shown in Fig. 1 (i.e. six) and hence the number of light signals that can be handled by apparatus 11 is by way of example only and that the maximum number of locations that may be handled by apparatus is limited only by the cross sectional diameter of the individual fibers and the size of the input slit 33 and photocathode 37 (i.e. the number of descrete image spots formed in a row across the photocathode) and the characteristics of the video camera 17. Thus, optical fiber assembly 13 may comprise a plurality of as many as 1026 optical fibers or more, each for receiving a light signal from a different location.

Streak camera 15 may be a picosecond type streak camera such as the Model Number C 1370 streak camera manufactured by Hamamatsu Photonics K.K. in which light pulses in the picosecond range may be sensed and displayed.

Television camera 17 may be a Hamamatsu Photonics K.K. Model Number C1000.

0164886

Streak camera 15 may further include a mask 91 on the front of photocathode 37 for clearing the image of each optical fiber that is formed on photocathode 37. The mask 91 may comprise a sheet of light reflecting or absorbing material having a horizontal row of pin holes, with each pin hole positioned relative to one of the optical fibers, receiving one of the light signals. Mark 91 may be separate from photocathode 37, as shown, or integrally formed therewith. Streak camera 15 may further include a mask 93 on phosphor screen 45 for clearing the individual streak images formed on phosphor screen 45. Mark 93 may comprise a sheet of material having a horizontal row of equally sized rectangular vertical slots, each slot sized to receive one of the streak images. Mark 93 may either be on the front size of phosphor screen 45 for clearing the shape of the electron image impinging thereon or on the back side of phosphor screen 45 for clearing the shape of the optical image formed thereon and may either be separate from phosphor screen 45 or integral therewith.

As can be appreciated, apparatus 11 can also be used to sense and display a plurality of electrical signals occuring simultaneously at a plurality of locations by converting each electrical signal into an optical signal at that location by any known means. Also, a keyboard can be used instead of a control panel 34 having switches as shown for communicating with computer 19.

The invention may also be used to sense and display the temporal properties of a plurality of light signals, each light signal being light of a different wavelength. As shown in Fig. 7, light signals $L_{21}$ through $L_{26}$, each of a different wavelength, are transmitted through individual optical fibers 81-1 through 81-6 of equal length through a coupler 82 to a single optical fiber 81-7 which is connected to the input of a spectrograph 95. In the spectrograph the light is dispersed into its component wavelengths. Each wavelength is then transmitted by a separate optical fiber 97-1 through 97-6 to a different location along the length of input slit 33 of streak camera 15. In this arrangement the optical fibers 97-1 through 97-6 making up optical fiber assembly 131 are not exactly equal in length but, instead, are sized appropriately to compensate for the different speeds of light through the optical fibers caused by the different indices of refraction of each wavelength. A prism or a grating may be used in place of the spectrograph.

The sweep rate of streak camera may be changed as desired so as to produce sweep times longer than picoseconds, such as for example microseconds, by simply using a sweep generator designed to produce the desired sweep rate.

0164886

Also, instead of using two sets of optical fibers coupled together in which the fibers in each set are equal in length, two sets of optical fibers coupled together in which the fibers in each set are not equal in length may be used provided that the total path length of each coupled pair of fibers is the same.

Also, the phosphor screen 45 in streak camera 15 and the TV camera 17 may be replaced by a diode array, or other similar device, connected through a demultiplexing device or other similar device directly to computer 19.

As decribed above apparatus according to the invention can include a streak camera, a plurality of optical fibers, a television camera or other equivalent device for converting an optical image to an electrical image, a computer, a TV monitor or other similar display device and a control device. The plurality of optical fibers transfer the light signals from each one of the different locations to the input of the streak camera, each light signal entering the camera at a different location along an axis orthogonal to the sweep axis of the camera. The optical fibers are sized so that the light signals from all of the locations arrive at the streak camera at the same time. The streak camera includes a photocathode plate, an accelerating mesh, a pair of sweeping electrodes and a phosphor screen. The light signals received by the streak camera are converted into an electron image pattern by the photocathode plate, accelerated by the

0164886

accelerating mesh and then electrostatically by the pair of sweeping electrodes to produce a plurality of spaced streak images on the phosphor screen which is at the output end of the streak camera, each streak image representing a trace of intensity vs. time of one of the light signals.

As is known, in some streak cameras the streak axis is vertical while in other streak cameras the streak axis is horizontal. If the sweep axis of the streak camera is vertical, then the input light signals to the camera are arranged in a horizontal row and the resulting streak images are oriented vertically. On the other hand, if the sweep axis of the streak camera is horizontal, then the input light signals to the camera are arranged in a vertical row and the resulting streak images are oriented horizontally.

The streak image pattern on the phosphor screen is converted into an electrical image by the television camera or equivalent device and then digitized and stored and/or processed in the computer. The computer can be programmed to allow the number of streak images displayed, the X and Y axes of the displayed image and the time scale of the swept image to be selectively changed by the user. The TV monitor which is coupled to the computer can display a trace of intensity vs. time of a selected number of the stored streak images, the number of images displayed as well as the signal scale, time scale and X and Y axes being adjustable through the control device which is coupled to the computer and which may be manually or automatically operated.

0164886

CLAIMS

1.  Apparatus for sensing and displaying the temporal properties of a plurality of light signals occurring at spatially separated locations simultaneously, characterised by

a.  a streak camera (15) having an input end (25) and an output end (29),

b.  optical fiber means (13) for transmitting each light signal separately from said spatially separated locations (21 to 26) to said input end (25) of said streak camera (15) such that each light signal will produce a separate streak image at said output end (29),

c.  means (17) for forming an electrical image of the pattern of streak images formed at said output end (29) of said streak camera (15),

d.  a computer (19) for storing and/or processing the electrical image formed by said electrical image forming means (17),

e.  means (21) for selectively displaying one or more of said streak images, and

f.  a control device (23) for controlling said computer (19) and the output of said displaying means (21).

2.    Apparatus as claimed in Claim 1, characterised in that said streak images formed at said output end (29) of said streak camera (15) are spatially separated from each other.

3.    Apparatus as claimed in Claim 1 or Claim 2, characterised in that said input end (25) of said streak camera (15) includes an input slit (33), a photocathode (37) and optics (35) for imaging said input slit (33) onto said photocathode (37), and said output end (29) includes a phosphor screen (45).

4.    Apparatus as claimed in any preceding claim, characterised in that said optical fiber means (13) comprises a first plurality of optical fibers (51-1, 51-6) each having an input end for receiving one of said light signals from one of said spatially separated locations (21 to 26) and an output end for transmitting the light received to said streak camera (15).

5.    Apparatus as claimed in Claim 4, characterised in that said optical fibers (51-1, 51-6) in said first plurality of fibers are equal in length.

6.    Apparatus as claimed in Claim 4 or Claim 5, characterised in that said optical fiber means (13) includes a second plurality of optical fibers (57-1, 57-6) of equal length and a coupling plate (53) for coupling the input end

0164886

of each fiber (51-1, 51-6) in said first plurality of fibers to the output end of a fiber (57-1, 57-6) in said second plurality of fibers, the input end of each fiber (57-1, 57-6) in said second plurality of fibers being disposed at one of said light receiving locations ($L_1$ to $L_6$).

7. Apparatus as claimed in Claim 6, characterised in that said coupling plate (53) includes a plurality of fiber optic couplers (55) each including a light shutter (56).

8. Apparatus as claimed in any preceding claim, characterised in that said means for forming an electrical image of the pattern of streak images is a television camera (17).

9. Apparatus as claimed in any preceding claim, characterised in that said means for forming an electrical image of the pattern of streak images is a diode array at the output of the streak camera (15).

10. Apparatus as claimed in any preceding claim, characterised in that said means for selectively displaying the streak images is a television monitor (21).

11. Apparatus as claimed in Claim 3, characterised by a mask (91) having a row of discrete pin holes therein on the front of or in the photocathode (37), each pinhole being adapted to receive one of said input signals.

12. Apparatus as claimed in Claim 3, characterised by a mask (93) having a row of rectangular slots therein on said phosphor screen (45) for clearing each one of the streak images formed.

13. Apparatus as claimed in any one of Claims 4 to 7, characterised in that the light signals are of different wavelengths and the optical fibers are sized to compensate for the different wavelengths so that all of the light signals will arrive at the streak camera (15) at the same time.

14. Apparatus as claimed in any preceding claim, characterised in the said control device (23) includes a means for controlling the signal scale, means for controlling the time scale, means for controlling the X-axis, means for controlling the Y-axis and means for selecting the streak image to be displayed.

15. A streak camera arrangement of the type including a streak camera (15) for generating a visible streak image of a light signal, a television camera (17) for converting the streak image into an electrical image and a display means (21) for displaying the electrical image, characterised by a plurality of optical fibers (51-1, 51-6) each coupled at a first end at the input of the streak camera (15) in a row orthoganal to the sweep axis of the streak camera (15) with the second end of each optical fiber (51-1, 51-6) positioned to receive an individual light signal whereby said streak camera (15) will generate a pattern of streak images, one corresponding to each light signal.

0164886

16. Apparatus for sensing and displaying the temporal properties of a plurality of light signals of different wavelengths, characterised by

a. a spectograph having an input and an output,

b. optical means for transmitting said plurality of light signals to the input of the spectograph,

c. a streak camera (15) having an input end (25) and an output end (29),

d. optical fiber means for transmitting each output light signal separately from said spectrograph to said input end (25) of said streak camera (15) such that each light signal will produce a separate streak image at said output end (29),

e. means (17) for forming an electrical image of the pattern of streak images formed at said output end (29) of said streak camera (15),

f. a computer (19) for storing and/or processing the electrical image formed by said electrical image forming means (17),

g. means (21) for selectively displaying one or more of said streak images, and

h. a control device (23) for controlling said computer (19) and the output of said displaying means (21).

FIG. I

TO TRIGGER SIGNAL

SWEEP GENERATOR _31_

HORIZONTAL POSITIONING CIRCUIT _42-1_

_33_  _35_  _91_  _41_  _93_  _39_  _37_  _42_  _43_  _45_  _47_

_25_    _27_    _29_

_15_    FIG. 2

L1  51-1  51  _15_
L2  51-2
L3  51-3
L4  51-4
L5  51-5
L6  51-6    FIG. 3

_55_    FIG. 5

TO VOLTAGE SOURCE
_55_    _56_    FIG. 6

_37_
D1  D3  D5
D2  D4  D6    FIG. 4

L21  81-1  _131_  97-1
L22  82  97-3
L23  _95_  _15_
L24  81-3  81-7
L25  81-5  81-6
L26    97-6    FIG. 7

## DOCUMENTS CONSIDERED TO BE RELEVANT

EP 85303232.4

| Category | Citation of document with indication, where appropriate, of relevant passages | Relevant to claim | CLASSIFICATION OF THE APPLICATION (Int Cl 4) |
|---|---|---|---|
| Y | US - A - 4 352 127 (TSUCHIYA)<br>* Fig. 1-3; column 1, lines 13-59 *<br>-- | 1-4,8, 10,13-16 | H 04 N 5/30<br>H 04 N 7/18<br>H 01 J 31/26 |
| Y,D | US - A - 3 892 468 (DUGUAY)<br>* Column 2, lines 47-55; column 7, line 34 - column 10, line 16; fig. 7 * | 1-4,8, 10,14, 15 | |
| A | <br>-- | 6,7,9 | |
| Y | US - A - 4 405 199 (OGLE)<br>* Fig. 2; column 2, line 32 - column 3, line 22 *<br>-- | 13,16 | |
| Y,D | US - A - 4 232 333 (HIRUMA)<br>* Column 1, line 60 - column 3, line 27 *<br>-- | 1-4,8, 10,13, 14,16 | TECHNICAL FIELDS SEARCHED (Int Cl 4) |
| A,D | US - A - 4 435 727 (SCHILLER)<br>* Fig. 1-5 *<br>---- | 1,4,8, 15,16 | H 04 N 5/00<br>H 04 N 7/00<br>H 01 J 31/00<br>G 02 B 6/00<br>G 01 J 1/00<br>G 01 J 3/00<br>G 01 N 21/00 |

The present search report has been drawn up for all claims

| Place of search | Date of completion of the search | Examiner |
|---|---|---|
| VIENNA | 30-07-1985 | GRONAU |